# EUROPEAN PATENT APPLICATION

(11) **EP 2 216 370 A1**
(43) Date of publication of application: **11.08.2010**
(21) Application number: 09305114.2
(22) Date of filing: 06.02.2009
(51) Int. Cl.: C08L 95/00, C08K 3/34, C01B 33/12, C04B 26/26

(54) **Asphalt**

(71) Applicant: Shell Internationale Research Maatschappij B.V., 2596 HR Den Haag (NL)
(72) Inventor: Boerrigter Harold, 1031 HW Amsterdam (NL); In't Veen Bernadus Cornelis Maria, 1031HW Amsterdam (NL); Papinaud Laurent, 76650 Petit Couronne (FR); Vasudevan Jeyan, 76650 Petit Couronne (FR)
(74) Representative: Matthezing, Robert Maarten

(57) **Abstract**

Asphalt comprising a binder and aggregate is disclosed. The aggregate comprises filler and at least a portion of the filler is a mixture of products resulting from the reaction of carbon dioxide with a natural silicate mineral.

## Description

### Field of the Invention

The invention relates to asphalt that is suitably used to prepare asphalt pavements.

### Background of the Invention

Road surfaces are typically made from asphalt, which is a mixture of a binder, such as bitumen, and aggregate. The aggregate fractions are typically categorised as filler (size smaller than 63µm), sand (size from 63µm up to and including 2mm) and stone fractions (size greater than 2mm).

The properties of the road surface are related to the intrinsic properties of the filler. Desirably the filler shows little or no tendency to swell or to separate from the binder in the presence of water. If the filler is susceptible to swelling in the presence of water, the road surface may disintegrate during damp weather conditions. US 3,977,891 discloses a filler material having a low sensitivity to water. The filler comprises a natural hydrated silicate that has been subjected to a heat treatment. A commercial product, Asphacal ^{®} H30, is a filler material consisting of hydrated lime and limestone powder, that has low sensitivity to water.

The present inventors have sought to provide an alternative filler for asphalt having low water sensitivity.

### Summary of the Invention

Accordingly, the present invention provides asphalt comprising a binder and aggregate, wherein the aggregate comprises filler, and wherein at least a portion of the filler is a mixture of products resulting from the reaction of carbon dioxide with a natural silicate mineral.

The present inventors have found that the mineral products produced during carbon sequestration processes wherein carbon dioxide is reacted with a natural silicate material are a highly suitable filler material having low water sensitivity.

### Detailed Description of the Intention

At least a portion, and possibly all, of the filler in the asphalt of the present invention is a mixture of products resulting from the reaction of carbon dioxide with a natural silicate mineral. The reaction of carbon dioxide with natural silicate materials is used to sequester carbon dioxide, thus avoiding its release into the atmosphere.

Natural silicate minerals are composed of orthosilicate monomers, i.e. the orthosilicate ion SiO₄⁴⁻ which has a tetrahedral structure. Orthosilicate monomers form oligomers by means of O-Si-O bonds at the polygon corners. The Q^{s} notation refers to the connectivity of the silicon atoms. The value of superscript s defines the number of nearest neighbour silicon atoms to a given Si. Orthosilicates, also referred to as nesosilicates, are silicates which are composed of distinct orthosilicate tetrahedra that are not bonded to each other by means of O-Si-O bonds (Q⁰ structure). Chain silicates, also referred to as inosilicates, might have a single chain (SiO₃²⁻ as unit structure, i.e. a (Q²)ₙ structure) or might be double chain silicates ((Q³Q²)ₙ structure). Sheet silicate hydroxides, also referred to as phyllosilicates, have a sheet structure (Q³)ₙ.

Orthosilicates and chain silicates react with carbon dioxide to form carbonates and silica:

(Mg,Ca)ₓSi_{y}O_{x+2y} + xCO₂ ⇒ x(Mg,Ca)CO₃ + ySiO₂

Examples of magnesium or calcium orthosilicates suitable for mineral carbonation are olivine, in particular forsterite, and monticellite. Examples of suitable chain silicates are minerals of the pyroxene group, in particular enstatite or wollastonite. WO 02/085788 discloses a process wherein silicates selected from the group of ortho-, di-, ring, and chain silicates, are dispersed in an aqueous electrolyte solution and reacted with carbon dioxide.

The more abundantly available magnesium or calcium silicate hydroxide minerals, for example serpentine and talc, are sheet silicates and are more difficult to convert into carbonates, i.e. the reaction times are much longer. Such sheet silicate hydroxides need to undergo a heat treatment or activation at elevated temperatures prior to the reaction with carbon dioxide. WO 2007/060149 discloses a process for activating serpentine by conversion to olivine, wherein the serpentine is contacted with a hot synthesis gas. The activation takes place at temperatures between 600 and 800 °C. The resulting amorphous olivine is reacted with carbon dioxide.

The mixture of products resulting from the reaction of carbon dioxide with a natural silicate mineral may be produced by any suitable process known to the skilled person. The mixture of products is preferably not subjected to any further treatment before it is incorporated as filler into asphalt, i.e. it can be incorporated directly from the sequestration process into the asphalt.

The portion of the filler in the asphalt that is a mixture of products resulting from the reaction of carbon dioxide with a natural silicate mineral, is preferably at least 30wt% (based upon the total weight of filler), more preferably at least 50wt% and most preferably at least 80wt%, based upon the total weight of filler. In one embodiment of the invention, all of the filler is a mixture of products resulting from the reaction of carbon dioxide with a natural silicate mineral. It is desirable to maximise the amount of filler that is a mixture of products resulting from the reaction of carbon dioxide with a natural silicate mineral, because this filler has low water sensitivity.

The aggregate in the asphalt of the invention comprises filler (aggregate fraction having size smaller than 63µm), and preferably further comprises sand (size from 63µm up to and including 2mm) and/or stone (size greater than 2mm). A wide range of aggregate types and size distributions may be employed in the asphalt of the present invention, the type and mix of aggregate varying with the application for which the asphalt is to be used. Preferably stones (size greater than 2mm) comprise at least 10% of the aggregate, more preferably at least 15% and most preferably at least 20%. Preferably stones comprise up to 70% of the aggregate, more preferably up to 65%, most preferably up to 60%. Filler and optionally sand preferably constitutes the balance.

The amount of binder in the asphalt of the present invention is preferably in the range of from 1 to 20% wt, more preferably in the range of from 2 to 10% wt, and most preferably in the range from 3 to 7% wt, based on total weight of asphalt.

The binder in the asphalt may be a bituminous binder or may be a synthetic binder having similar rheological and mechanical properties to a bituminous binder. The penetration at 25°C of the binder (as measured according to EN 1426) is preferably between 10 and 350, more preferably between 10 and 250. The softening point of the binder (as measured according to EN 1427) is preferably between 30 and 70°C, more preferably between 35 and 55°C.

In one embodiment of the invention, the binder in the asphalt is a bituminous binder. Bituminous binders are commonly used because they are inexpensive and typically have suitable mechanical properties.

In another embodiment of the invention, the binder in the asphalt is a clear synthetic binder. Clear synthetic binders are described for example in US 4,629,754. Clear binders may comprise components of vegetable origin, e.g. vegetable oils and natural rosins. Clear binders comprising components of vegetable origin are described in EP 1 466 878.

The asphalt may be prepared using conventional mix processes for manufacturing asphalt. The asphalt can be used to form asphalt pavement in conventional pavement-laying processes.

The present invention further provides the use of a mixture of products resulting from the reaction of carbon dioxide with a natural silicate mineral as filler in asphalt comprising a binder and aggregate, wherein the aggregate comprises filler.

The invention is further illustrated by the following non-limiting examples.

### Reaction of Carbon Dioxide with Olivine

Olivine (200 mesh grade, particle size of 75µm or less) was sieved to provide a grade wherein the particle size was less than 63µm. The mineral was reacted as a slurry in water in a stirred autoclave batch slurry reactor. 1 mol NaCl and 0.6 mol NaHCO₃ were added to enhance the mineralization reaction. The reactor was heated to the reaction temperature, typically 175° to 180°C, and carbon dioxide was provided to a total pressure of 40 bar. The reaction pressure was kept constant during the experiment by providing additional carbon dioxide. At the end of the run, the reactor was depressurized and cooled down to ambient conditions after which the reactor was opened and the slurry filtered. The filter cake was flushed at least 3 times with fresh demineralised water to remove any salt and was successively dried for 1 to 4 days at 130°C at atmospheric conditions to remove the adsorbed water.

The resulting material was analysed according to standard methods. The fineness of the material was analysed using EN 196-6. The particle density was analysed by the pyknometer method according to EN 1097-7. The void content was determined according to EN 1097-4. The water susceptibility of the filler was determined using EN 1744-4. This standard specifies a procedure for the determination of the water susceptibility of fillers for bituminous mixtures, by separation of filler from a bitumen filler mixture. The water susceptibility values are reported as water sensitivity (WS%), volume increase (Q%) and loss on stability (S_{MA}%). Table 1 compares the properties of the material with the properties of commonly used filler materials: Meac, Portland Cement and Asphacal^{®} H30. Asphacal^{®} H30 is a high quality filler with low water sensitivity.

**Table 1**

| Filler | Fineness (%) EN 196-6 | | | Particle density (gcm⁻³) EN 1097-7 | Void content (%) EN 1097-4 | Water susceptibility EN 1744-4 | | |
|---|---|---|---|---|---|---|---|---|
| | <63µm | <90µm | <125µm | | | WS% | Q% | S_{MA}% |
| Meac | 92.9 | 98.6 | 100.0 | 2.706 | 34 | 1 | 1.2 | 6 |
| Portland Cement | 88.9 | 93.8 | 96.7 | 3.033 | 41 | 0 | 1.4 | 13 |
| Asphacal^{®} H30 | 88.3 | 97.0 | 99.1 | 2.694 | 55 | 1 | 0.9 | 4 |
| Carbonated Olivine | 96.4 | 99.8 | 100.0 | 2.861 | 51 | 1 | 1.4 | 2 |

The carbonated olivine has appropriate size, density and void content to be used as a filler material. The water sensitivity in an asphalt mixture is better than the water sensitivity of conventional fillers such as Meac and Portland cement and is comparable to the water sensitivity of Asphacal^{®} H30.

## Claims

1. Asphalt comprising a binder and aggregate, wherein the aggregate comprises filler, and wherein at least a portion of the filler is a mixture of products resulting from the reaction of carbon dioxide with a natural silicate mineral.

2. Asphalt according to claim 1, wherein the natural silicate material is orthosilicate and/or chain silicate.

3. Asphalt according to claim 1, wherein the natural silicate material is a sheet silicate that has undergone heat treatment or activation at elevated temperatures prior to reaction with carbon dioxide.

4. Asphalt according to any preceding claim, wherein the portion of the filler in that is a mixture of products resulting from the reaction of carbon dioxide with a natural silicate mineral, is at least 80wt%, based upon the total weight of filler.

5. Asphalt according to any preceding claim, wherein the aggregate further comprises sand and stones, and the stones comprise from 20% to 60% of the aggregate.

6. Asphalt according to any preceding claim, wherein the amount of binder is in the range of from 1 to 20% wt, based on total weight of asphalt.

7. Asphalt according to any preceding claim, wherein the binder is a bituminous binder.

8. Asphalt according to any one of claims 1 to 6, wherein the binder is a clear synthetic binder.

9. Use of a mixture of products resulting from the reaction of carbon dioxide with a natural silicate mineral as filler in asphalt comprising a binder and aggregate, wherein the aggregate comprises filler.
